# EUROPÄISCHE PATENTSCHRIFT

(11) **EP 1 058 839 B1**
(45) Veröffentlichungstag und Bekanntmachung des Hinweises auf die Patenterteilung: **27.04.2005**
(21) Anmeldenummer: 98965261.5
(22) Anmeldetag: 14.12.1998
(51) Int. Cl.: G01N 27/38

(54) **TITRIERVORRICHTUNG ZUR BESTIMMUNG VON TENSIDEN**
TITRATION DEVICE FOR THE DETERMINATION OF SURFACTANTS
DISPOSITIF DE TITRAGE AMELIORE POUR LA DETERMINATION DE TENSIOACTIFS

(30) Priorität: 22.01.1998 DE 19802273
(43) Veröffentlichungstag der Anmeldung: 13.12.2000
(73) Patentinhaber: Deutsche Metrohm Gesellschaft mit beschränkter Haftung & Co., 70794 Filderstadt (DE)
(72) Erfinder: REGER, Hubert, D-72074 Tübingen (DE); CZIURLOK, Hermann, D-53902 Bad Münstereifel (DE); FAAS, Birgit, D-75446 Wiernsheim (DE); ZIMMERMANN, Günther, D-72658 Bempflingen (DE)
(74) Vertreter: Schrell, Andreas, Dr.
(86) Internationale Anmeldenummer: PCT/EP1998/008189
(87) Internationale Veröffentlichungsnummer: WO 1999/038004

(56) Entgegenhaltungen:
- EP-A- 0 300 662
- WO-A-90/10861
- WO-A-91/12522
- GB-A- 2 076 545
- LU-A- 54 346
- US-A- 4 933 062
- LJ. ZELENKA: "TITRATION OF ANIONIC SURFACTANTS USING A NEW POTENTIOMETRIC SENSOR" ANALYTICAL LETTERS, Bd. 22, Nr. 13-14, 1989, Seiten 2791-2802, XP002104441
- MAYER M ET AL: "FLOW INJECTION BASED RENEWABLE ELCTROCHEMICAL SENSOR SYSTEM" ANALYTICAL CHEMISTRY, Bd. 68, Nr. 21, 1. November 1996, Seiten 3808-3814, XP000634983
- R. SCHULZ: "TITRATION IONISCHER TENSIDE IN KÜHLSCHMIERSTOFFEN" LABORPRAXIS, Bd. 21, Nr. 10, Oktober 1997, Seiten 64-68, XP002104442
- Römpp-Chemie Lexikon 1990, Georg Thieme Verlag, Falbe und Regitz, Stuttgart, New York

## Beschreibung

Die vorliegende Erfindung betrifft eine verbesserte Titriervorrichtung, eine Tensidelektrode und das auf beziehungsweise in der Tensidelektrode vorhandene oder anbringbare Sensormaterial. Die Erfindung betrifft auch Verfahren zur Herstellung dieses Sensormaterials, Verfahren zur titrimetischen Bestimmung von Tensiden sowie die Verwendung des sensormaterials zur Bestimmung von Tensiden in wässrigen oder organischen Medien.

Titriervorrichtungen sind auf den verschiedensten Gebieten für die chemische Bestimmung einer oder mehrerer Substanzen in Proben einsetzbar. In der allgemeinen Chemie, der Petrochemie, der Lebensmittelchemie, der Pharmazie, der Medizin sowie auf dem Wasser- und Abwassersektor läßt sich mittels Titration die Menge einer gesuchten Substanz bestimmen. Dazu erfolgt eine genaue Dosierung eines Reagenzes mit bekanntem Wirkstoffgehalt, das in bekanntem Verhältnis mit dem gesuchten Stoff reagiert. Die Menge des benötigten Reagenzes, die bis zum Erreichen eines sogenannten Endpunktes benötigt wird, ist ein Maß für die Menge des zu bestimmenden Stoffes. Der in der zu untersuchenden Lösung oder Emulsion jeweils vorliegende Titrationszustand wird über eine Elektrode an eine Meß- und Auswerteeinrichtung der Titriervorrichtung übermittelt, die dann den Titrationsendpunkt bestimmt.

Insbesondere im Bereich der Waschmittel-, Detergenzien- und Kosmetikbranche spielt die Tensidanalytik eine große Rolle. Der Gehalt an Tensiden soll demgemäß möglichst schnell, präzise und richtig bestimmt werden. Bekannt ist es dazu, die Zweiphasentitration nach Epton durchzuführen. Bei der Zweiphasentitration nach Epton wird zur Phase Wasser eine zweite mit Wasser nichtmischbare Lösungsmittelphase wie zum Beispiel Chloroform zugesetzt. In dieser Chloroformphase löst sich das im Verlauf der Titration sich bildende Ionenpaar, das sich bei der Umsetzung des Tensids aus der Probe mit dem entgegengesetzt geladenen Tensid aus dem Titriermittel bildet. Die so während des Titrationsprozesses stattfindende Extraktion des Ionenpaars in die Lösungsmittelphase wirkt sich wie eine Erhöhung der Stabilität des Ionenpaars aus und bewirkt damit eine Empfindlichkeitssteigerung. Zusätzlich werden durch den Extrationsprozeß Matrixstörungen minimiert.

Als nachteilig erweist es sich bei der Zweiphasentitration nach Epton, daß das stark gesundheitsschädliche Chloroform eingesetzt werden muß, dessen Einsatz in der USA für analytische Zwecke bereits verboten ist. Zudem ist der Endpunkt nur visuell oder auf optischem Wege zu erkennen und das Verfahren ist nur schwer automatisierbar. Die Zweiphasentitration nach Epton gilt jedoch nach wie vor als Schiedsmethode und als die weltweit am häufigsten praktizierte Tensid-Titration. Angesichts der aufgeführten gravierenden Nachteile dieses Titrationsverfahrens besteht jedoch dringender Bedarf, dieses zu verbessern. Dabei soll möglichst der für die Zweiphasentitration typische Chemismus der Extraktion des Ionenpaars mittels einer zweiten, mit Wasser nicht mischbaren Phase, beibehalten werden. Dies gilt sowohl im Hinblick auf eine gute Vergleichbarkeit der Werte mit der etablierten Schiedsmethode als auch mit Blick auf die Robustheit des Titrierverfahrens gegen Matrixstörungen.

Bekannt ist es auch, Titriervorrichtungen mit Tensidelektroden einzusetzen, deren Sensormaterial als Polymermembran ausgebildet ist. Vorzugsweise werden diese Membranen aus einer Mischung hergestellt, bestehend aus:
- PVC Pulver, das in Tetrahydrofuran gelöst wird
- Weichmacher, zum Beispiel Dibutylphtalat und einem
- Ionophor, basierend auf einem Ionenpaar, das gebildet wird aus anionischem und kationischem Tensid.

Die beschriebene Mischung kann entweder zu einer Membran gegossen werden, die nach der Aushärtung auf eine Elektrodenhülse aufgeklebt wird, wobei die Kontaktierung zur Titriervorrichtung über eine Flüssigableitung geschieht (Flüssigmembran-Elektroden). Die flüssige Membranmischung kann aber auch direkt auf feste, leitfähige Trägermaterialien wie Metall, Graphit oder Kohlefasern aufgebracht werden und härtet erst dort zur ionensensitiven Membran aus (Solid-State Elektroden).

Tensidelektroden auf Polymermembranbasis sind nur im wäßrigen Medium einsetzbar. Die Potentialbildung erfolgt durch eine spezifische Wechselwirkung zwischen dem in der Membran enthaltenen Ionophor und den zu bestimmenden Ionen, das heißt Tensiden, in der Meßlösung. Diese Wechselwirkung führt in einer Gleichgewichtsreaktion zu einem reversiblen Übergang der Meßionen aus der Meßlösung in/an die Sensorphase und damit verbunden zu einer elektischen Potentialdifferenz an der Phasengrenze Meßlösung/Sensorphase, die gegen eine Bezugselektrode stromlos, das heißt potentiometrisch gemessen wird. Die Lage des Ionenaustauschgleichgewichts ist dabei konzentrationsabhängig.

Ionophore, welche in Matrices aus Polyvinylchlorid (PVC) gelöst sind, sind bekannt; dabei sind neben dem Ionophor und PVC auch stets Weichmacher im Sensormaterial vorhanden: Aus Zelenka Lj. et al., Analytical Letters 22(13&14), 2791-2802 (1989)ist eine Tensidelektrode für die potentiometrische Titration anionischer Tenside bekannt, hergestellt mittels Beschichtung einer Ru 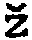 i 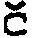 ka Selectrode mit einer Beschichtungslösung, worin ein Hyamine®1622-Dodecylsulfat-Komplexsalz als Ionophor und PVC mit dem Weichmacher Tricresylsulfat in Tetrahydrofuran gelöst ist. Aus der EP 0 300 662 A2 ist eine ionenselektive Elektrode zur Messung von ionischen oberflächenaktiven Substanzen bekannt, worin ein Ionophor (elektroaktive Substanz) in einer PVC-Matrix auf einen festen Träger, insbesondere Graphit, aufgetragen ist. Die Beschichtungslösung beinhaltet PVC mit dem Weichmacher Tritolylphosphat, ein Ionophor und Tetrahydrofuran als Lösungsmittel.

Die GB 2 076 545 A beschreibt eine Tensidelektrode auf Basis einer Polymermembran, wobei die Membran mit einer Lösung eines Komplexes eines wasserlöslichen Copolyelektrolyts aus polymerisierten Strukturen (Copolymer) und einer oberflächenaktiven Substanz hergestellt wird. Der als Ionophor fungierende Komplex liegt dabei in einpolymerisierter Form vor.

Den Polymermembranelektroden gemeinsam sind folgende Nachteile:
- Tensidformulierungen enthalten oftmals hydrophobe organische Anteile wie Fette und Öle, die diese Polymermembranelektroden relativ schnell irreparabel beschädigen. Die Zerstörung durch diese Probenbestandteile geschieht dabei sowohl über die Schädigung der Membran selbst, als auch durch Herauslösen des lipophilen Ionophors aus der Membran.
- Ein Einsatz der Polymermembranelektroden zur potentiometrischen Indikation im Zweiphasensystem scheidet ebenfalls aufgrund der Membranbeschädigung, wie sie durch den für die Titration im Zweiphasensystem zwingend erforderlichen Lösungsmittelanteil verursacht wird, aus. Zudem entziehen diese Lösungsmittel dem Membranmaterial sehr schnell den lipophilen Ionophor sowie den Weichmacher und machen die Elektrode zusätzlich auf diese Weise unbrauchbar.
- Probenbestandteile, wie sie zum Beispiel in pulverförmigen Waschmitteln vorhanden sind, machen eine Tensidtitration aber auch im wäßrigem Medium mit Polymermembranelektroden unmöglich.
- Selbst vergleichsweise harmlose, mit Wasser mischbare Lösemittel wie Ethanol und Methanol verkürzen deutlich die Lebensdauer der Polymermembranelektroden und dürfen daher nur in niederen Konzentrationen anwesend sein. Diese Lösungsmittelzugaben werden eingesetzt, um verschiedene Tensidproben überhaupt erst in Lösung zu bringen und um typische Tensid Phänomene wie Schaumbildung, Micellbildung und Substantivität zu minimieren.
- Die Ionenpaare, die sich im Verlauf der Titration bei der Umsetzung des Tensids aus der Probe mit dem entgegengesetzt geladenen Tensid aus dem Titriermittel bilden, können die Membran belegen und damit desaktivieren. Besonders ausgeprägt ist dieses Phänomen bei der Titration nichtionischer Tenside, die mittels Zugabe von Bariumsalz in ein pseudokationisches Tensid überführt und dann mit Tetraphenylborat titriert werden.
- Den Variationsmöglichkeiten und damit verbunden auch den Optimierungsmöglichkeiten des Sensormaterials sind bei den Polymermembranelektroden enge Grenzen gesetzt. So ist beispielsweise ein hoher Weichmacheranteil erforderlich, damit die Membranen elastisch bleiben und die Membranstärke ist eng limitiert, um den elektrischen Widerstand tolerierbar zu halten.

In Anlehnung an das zuvor beschriebene Verfahren der klassischen Zweiphasentitration nach Epton ist auch eine modifizierte Zweiphasentitration bekannt. Bei diesem Verfahren kommt anstatt des stark giftigen Chloroforms das als nur mindergiftig deklarierte Methylisobutylketon (MIBK) als zweite Phase zum Einsatz. Die Indikation des Titrationsendpunkts geschieht mit einer lösungsmittelbeständigen Tensidelektrode, die von der Firma Metrohm unter dem Namen Surfactrode Resistant vertrieben wird. Die zuvor beschriebene Anforderung an ein alternatives Verfahren zur klassischen Zweiphasentitration nach Epton, -nämlich die weitgehende Übereinstimmung im Chemismus mit der klassischen Zweiphasentitration-, ist somit gewährleistet.

Bei der Surfractrode Resistant ist der Ionophor direkt in ein Graphit-Trägermaterial mit lösungsmittelbeständigem Polymer einpolymerisiert. Nachteilig bei diesem Elektrodenprinzip ist, daß die Herstellung dieser Elektrode recht aufwendig ist. Ein weiteres Problem, wie es nicht nur für die Surfractrode-Resistant, sondern generell für alle ionensensitiven Elektroden besteht, liegt darin, daß je fester der Ionophor in der Elektrodenphase gebunden wird, desto langsamer sich deren Ansprechverhalten gestaltet. Bindet man dagegen den Ionophor verhältnismäßig locker in das Sensormaterial ein, so resultiert daraus ein schnelles Herauslösen des Ionophors aus dem Sensormaterial durch das Meßmedium, was wiederum zu einer schnellen irreversiblen Erschöpfung des Sensormaterials führt. Insbesonders beim Einsatz von Tensidelektroden in lösungsmittelhaltigen Medien und in ganz besonderem Maße gilt dies für die Zweiphasentitration, spitzt sich diese Problematik zu einem unüberbrückbaren Gegensatz zu, solange von den Elektroden gleichzeitig eine hohe Lebensdauer und schnelles Ansprechverhalten erwartet wird. Die Konstruktion von Sensormaterialien für die potentiometrisch indizierte Zweiphasentitration gestaltet sich deswegen so schwierig, weil hier nahezu das gesamte Spektrum an Lösungsmittelkomponenten und -eigenschaften auf das Sensormaterial und den Ionophor einwirkt. Dazu kommt der Einfluß von Wasser als polarem Lösungsmittel und von Emulsionsvermittlern wie sie die Tenside selbst darstellen.

Das der vorliegenden Erfindung zugrundeliegende technische Problem besteht also darin, eine Titriervorrichtung bereitzustellen, die es gestattet, auch in organischen Meßlösungen oder -suspensionen schnell, präzise und kostengünstig eine Tensidtitration durchzuführen, wobei der Einsatz gesundheitsschädlicher Lösungsmittel wie Chloroform nicht notwendig ist.

Die Erfindung löst dieses technische Problem durch die Bereitstellung einer Titriervorrichtung gemäß Anspruch 12, deren Tensidelektrode einen Elektrodenschaft und ein erneuerbares Sensormaterial umfaßt, wobei das erneuerbare Sensormaterial dadurch gekennzeichnet ist, daß es ein plastisch verformbares Material ist und daher eine plastisch verformbare beziehungsweise preßbare Konsistenz aufweist. Das erfindungsgemäße erneuerbare Sensormaterial umfaßt zumindest mindestens einen Ionophor, vorzugsweise in hoher Konzentration, und ein leitfähiges Material, gegebenenfalls zusammen mit Additiven und/oder Bindemitteln. Das erneuerbare Sensormaterial besteht aus nicht-einpolymerisierten und/oder nicht im Verbund mit anderen Bestandteilen des Sensormaterials ausgehärteten Bestandteilen. Im Zusammenhang mit der vorliegenden Erfindung werden unter nicht-einpolymerisierten Bestandteilen solche -polymerisierte oder nicht-polymerisierte- Bestandteile des Sensormaterials verstanden, die nicht mit oder in den übrigen Bestandteilen des Sensormaterials in einem Verbund polymerisiert oder einpolymerisiert sind. Bei der Herstellung des Sensormaterials findet also keine Polymerisation oder Aushärtung statt. Das erneuerbare Sensormaterial besteht aus mindestens einem nicht-polymerisierten Ionophor und einem leitfähigen Material, welches nichtpolymerisiert oder nicht-einpolymerisiert ist. Die Bestandteile des erfindungsgemäßen Sensormaterials können auch polymerisierte Komponenten wie Kunststoff- oder Keramikpulver sein. Erfindungsgemäß ist aber vorgesehen, daß die einzelnen Bestandteile des Sensormaterials nicht im Verbund mit den übrigen Bestandteilen ausgehärtet oder einpolymerisiert sind. Das Sensormaterial wird erfindungsgemäß als plastische und/oder preßbare Masse in eine Aussparung des Elektrodenschafts eingepreßt oder aufgebracht und in dieser Form ohne weitere Behandlung zur Titration eingesetzt.

Die Tensidelektrode ist erfindungsgemäß so konzipiert, daß sich deren Sensormaterial verbrauchen kann und soll, und zwar in schichtweisem Abtrag, gleichzeitig aber schnell und kostengünstig regenerierbar beziehungsweise erneuerbar ist. Erfindungsgemäß lassen sich so die zuvor beschriebenen gegensätzlichen Forderungen, einerseits nach Lösemittelverträglichkeit und andererseits nach leichter Verfügbarkeit des Ionophors im Sensormaterial im Sinne kurzer Ansprechzeiten gleichermaßen erfüllen.

Im Zusammenhang mit der vorliegenden Erfindung wird unter einer Tensidelektrode eine ein Sensormaterial aufweisende Elektrode verstanden, die in der Lage ist, durch die spezifische Wechselwirkung zwischen dem im Sensormaterial vorhandenen Ionophor, auch als elektroaktive Substanz bekannt, beziehungsweise dem leitfähigen Material und den zu bestimmenden Tensiden in der Meßlösung ein Potential zu bilden. Im Zusammenhang mit der vorliegenden Erfindung wird unter einem erneuerbaren Sensormaterial Sensormaterial verstanden, das einer Tensidelektrode nicht permanent, das heißt während der gesamten Lebensdauer oder einem wesentlichen Teil davon, zugeordnet ist, sondern vielmehr beliebig häufig während der Lebensdauer der Tensidelektrode ausgetauscht oder nachgefüllt wird. Die Erfindung sieht demgemäß vor, daß sich das Sensormaterial während der Titration vergleichsweise schnell verbraucht und in vergleichsweise kurzen Zeitabständen dieses verbrauchte Sensormaterial von der Tensidelektrode entfernt und durch neues Sensormaterial ersetzt wird. Alternativ kann vorgesehen sein, vom Austausch des verbrauchten Materials abzusehen und statt dessen einfach nur Sensormaterial nachzufüllen. Ein wesentlicher Unterschied zu den bekannten Tensidelektroden liegt also darin, daß ein und dasselbe Sensormaterial nicht permanent einer Tensidelektrode zugeordnet ist, das heißt beispielsweise nicht unlösbar mit dieser verbunden ist oder nur unter größerem technischen, apparativen, zeitlichem oder finanziellen Aufwand von dieser lösbar ist, sondern daß vielmehr das Sensormaterial von Messung zu Messung oder auch in längeren Zeitabständen ausgetauscht wird.

Der Vorteil der erfindungsgemäßen Ausführung liegt unter anderem darin, daß das System sehr kurze Ansprechzeiten aufweist. Die Ursache für dieses Phänomen ist, daß sowohl das leitfähige Material als auch der Ionophor im erfindungsgemäßen Sensormaterial sowohl in hoher Konzentration als auch relativ frei vorliegen, das heißt nicht chemisch- oder an ein Polymer gebunden wie bei den Tensidelektroden gemäß des Standes der Technik. Kurze Ansprechzeiten gehen bei der Erfindung einher mit kurzen Konditionierzeiten, die in der Größenordnung von 5-30 Sekunden nach Erneuerung oder Tausch des Sensormaterials liegen.

Da die Erfindung eine Titriervorrichtung mit einer Tensidelektrode vorsieht, wobei die Tensidelektrode austauschbares, das heißt erneuerbares Sensormaterial aufweist, braucht auf den Aspekt des Herauslösens der Ionophoren und des leitfähigen Materials sowie der damit verbundenen Brüchigkeit der Sensorfläche keine Rücksicht genommen werden. Erfindungsgemäß ist es demnach auch nicht notwendig und auch nicht erwünscht, polymerisierende oder aushärtende Komponenten im Sensormaterial einzusetzen, die an oder in einem Träger aushärten oder polymerisieren. Die Polymerisation von Ionophoren beziehungsweise Trägermaterial in den bekannten Tensidelektroden dient dazu, die Haltbarkeit der Tensidelektroden beziehungsweise der damit verbundenen Sensormaterialien zu erhöhen, indem über die Polymerisation eine gewisse mechanische Stabilität beziehungsweise Elastizität erzeugt wird. Da die Erfindung die Austauschbarkeit des Sensormaterials vorsieht, ist eine Polymerisation nicht notwendig und auch nicht erwünscht, da die Komponenten Polymer und Weichmacher mit ursächlich für die Nachteile sind, wie sie bei der Beschreibung der Tensidelektroden gemäß des Stands der Technik aufgeführt sind.

Ein weiterer, bedeutender Vorteil der Erfindung liegt darin, daß die Zusammensetzung des Sensormaterials so auf die Löseeigenschaften des Messmediums abstimmbar ist, daß sich das Sensormaterial durch Anlösen (Erosion, Abrasion) im Verlauf der verschiedenen Titrationen langsam, vorzugsweise schichtweise, abträgt und so immer eine neue Sensoroberfläche mit neuem Ionophor ausbildet. Die hierdurch erzielte automatische, permanente Erneuerung der erfindungsgemäßen Sensoroberfläche entspricht nahezu in idealer Weise den Anforderungen an ein schnelles und reproduzierbares Ansprechverhalten.

Durch die in bevorzugter Weise vorgesehene erfindungsgemäße Zugabe abgestimmter Mengen löslicher neutraler Additive zum Sensormaterial (zum Beispiel Salze für wäßrige Medien) ist erfindungsgemäß das Ausmaß der gewünschten Erosion der Sensoroberfläche in Abhängigkeit der verwendeten Titriermedien gezielt steuerbar. Als weitere Additive können Farbpigmente zugesetzt werden, um verschiedene Sensormaterialien für das Auge voneinander unterscheidbar zu halten.

Die Verschmutzungsanfälligkeit der Sensoroberfläche ist vorteilhafterweise sehr gering. Neben der im Falle der vorliegenden Erfindung im Hinblick auf die Verschmutzungsgefahr vorteilhaften geometrischen Abmessungen der Sensoroberfläche und deren Anordnung wird vor allem durch die beschriebene gezielte automatische Erosion des Sensormaterials eine maximale Toleranz des Sensors gegenüber Verschmutzen erzielt. Diese Unanfälligkeit gegen Verschmutzung ist von hoher Bedeutung, da sowohl die Begleitkomponenten, wie sie beispielsweise in pulverförmigen Waschmitteln vorkommen, als auch das bei der Titration sich bildende Ionenpaar sich auf der Sensoroberfläche ablagern können und diese dadurch in ihrem Ansprechverhalten blockieren.

Im Falle starker Verschmutzung oder Beschädigung der Sensorfläche wird in der erfindungsgemäßen Ausführung einfach das verschmutzte Sensormaterial abgetragen und durch neues ergänzt oder ersetzt. Bei den Tensidelektroden gemäß dem Stand der Technik sind im Fall einer Verschmutzung oder Beschädigung die Reinigungsmöglichkeiten beziehungsweise Reparaturmöglichkeiten begrenzt. Bei Schäden am Sensor muß je nach Ausführungsform der Sensortip oder sogar die komplette Tensidelektrode erneuert werden, was mit erheblichen Kosten verbunden ist.

Das Erneuern beziehungsweise Nachfüllen des Sensormaterials geht sehr einfach vonstatten und kann auch vom ungeübten Anwender bewerkstelligt werden. Der Zeitaufwand hierfür ist mit ca. einer Minute zu veranschlagen.

Bei dem erfindungsgemäßen Sensormaterial ist das leitfähige Material zum Beispiel Kohlepulver, Graphit, leitfähiges Kunststoff- oder Keramikpulver und/oder Metallstaub, homogen direkt in das Sensormaterial eingebracht. Dies bringt stets niedrige ohmsche Widerstände mit sich, was hohe Sensorschichtdicken ermöglicht und wodurch sich eine aufwendige elektrische Abschirmung des Elektrodenschafts erübrigt.

Die Tensidelektrode selbst umfassend einen Elektrodenschaft mit mindestens einer Aufbringmöglichkeit für das erfindungsgemäße Sensormaterial unterliegt praktisch keinem Verschleiß. Sie ist sehr einfach im Aufbau und kostengünstig in der Herstellung.

Der bewußte Verzicht auf die mechanische Stabilität und Elastizität der Sensorfläche sowie auf deren hohe Haltbarkeit eröffnen neue Freiheitsgrade bei der Zusammenstellung der Sensorzusammensetzung und erleichtern damit in hohem Maße die Entwicklung noch besserer und spezifischer Sensormaterialien. Aufwendige und kostspielige Langzeittests entfallen, da das Sensormaterial für kurze bis mittlere Erneuerungszyklen konzipiert ist.

Die Erfindung betrifft auch eine Titriervorrichtung gemäß Anspruch 12 mit einer Tensidelektrode, wobei das Sensormaterial der Tensidelektrode mindestens ein leitfähiges Material enthält, und zusätzlich mindestens ein Ionophor vorhanden ist. Vorzugsweise kann selbstverständlich auch vorgesehen sein, daß das Sensormaterial der Tensidelektrode zusätzlich zu dem mindestens einen leitfähigen Material und dem vorzugsweise vorhandenen mindestens einen Ionophor Bindemittel sowie gegebenenfalls Farbpigmente und/oder Additive enthält.

In bevorzugter Ausführungsform der Erfindung ist das Bindemittel Paraffin.

In einer weiteren bevorzugten Ausführungsform der Erfindung ist das leitfähige Material Kohle, das heißt, reiner Kohlenstoff, leitfähiges Kunststoffoder Keramikpulver, Metall, insbesondere Metallstaub und/oder natürlicher Graphit, das heißt Kohlenstoff vermengt, zum Beispiel, mit Ton.

In einer weiteren bevorzugten Ausführungsform der vorliegenden Erfindung ist eine vorgenannte Titriervorrichtung vorgesehen, wobei das Sensormaterial der Tensidelektrode als Ionophor ein Tensid-Ionenpaar beziehungsweise ein Tensidgemisch, insbesondere ein äquimolares Tensidgemisch, aufweist. In einer besonders bevorzugten Ausführungsform der Erfindung wird als Ionophor ein äquimolares Gemisch aus Hyamine®1622, das heißt Benzethoniumchlorid und Natriumdodecylsulfat eingesetzt.

Die Erfindung betrifft selbstverständlich auch die Tensidelektrode der erfindungsgemäßen Titriervorrichtung. Die erfindungsgemäße Tensidelektrode gemäß Anspruch 4 ist dadurch gekennzeichnet, daß sie aus einem Elektrodenschaft und einem erneuerbaren Sensormaterial aufgebaut ist, wobei das erneuerbare Sensormaterial plastisch verformbare oder pressbare Konsistenz aufweist, nicht in den Verbund seiner Bestandteile einpolymerisierte Bestandteile aufweist. Das erfindungsgemäße Sensormaterial besteht in bevorzugter Ausführung nur aus nicht-polymerisierten Bestandteilen. Es kann aber selbstverständlich auch vorgesehen sein, polymerisierte Bestandteile einzusetzen, die aber nicht in einen Verbund mit den übrigen Sensorbestandteilen einpolymerisiert oder ausgehärtet sind. Diese nicht-polymerisierten oder nicht-einpolymerisierten Bestandteile sind mindestens ein leitfähiges Material sowie mindestens ein Ionophor. Die Tensidelektrode der vorliegenden Erfindung weist auch keine Membranen, insbesondere keine ionenselektive Membran oder dergleichen auf.

Die Tensidelektrode der vorliegenden Erfindung stellt also eine regenerierbare Tensidelektrode dar, deren Sensormaterial je nach Bedarf beliebig häufig und in beliebigen Zeitabständen ausgetauscht oder nachgefüllt werden kann. Der Elektrodenschaft kann in beliebiger Weise ausgeführt sein, wobei jedoch geeignete Aufnahmen für das auf- oder einzubringende Sensormaterial, wie Furchen, Rillen, Vertiefungen beliebiger Geometrie oder ähnliches vorhanden sein sollten, von denen eine elektrische Leitung zur Titriervorrichtung verläuft. Die erfindungsgemäße Tensidelektrode kann als Plastikrohr ausgeführt sein, welches mitteständig in seiner Längsachse eine elektrische Zuleitung, eine beispielsweise als Silberstab ausgeführte Kontaktiervorrichtung und zentral endständig, und zwar meßseitig, eine vorzugsweise kleine Vertiefung enthält. Diese kontaktierte Vertiefung dient der Aufnahme des erneuerbaren Sensormaterials, und kann im Querschnitt kreisförmig, rechteckig, polygonal oder anders ausgeführt sein. Das Sensormaterial ist vorzugsweise an einer oder mehreren, vorzugsweise kleinen, Stellen oder Aufnahmen des Elektrodenschafts angeordnet und stellt selbst keinen tragenden, integralen oder wesentlichen Strukturbestandteil des Elektrodenschafts dar. Das Sensormaterial wird vielmehr einfach auf, in oder an den Elektrodenschaft gedrückt oder sonstwie angebracht und erfährt dort keine weitere Behandlung. Das Sensormaterial wird in eine Vertiefung des Elektrodenschafts manuell oder mittels eines Preßwerkzeuges eingepreßt. Nach Verbrauch des Sensormaterials, das heißt, nachdem soviel Sensormaterial herausgelöst wurde, daß keine verläßliche Messung mehr möglich ist, kann dieses manuell oder mittels geeigneter Werkzeuge herausgeschabt und durch neues Sensormaterial ersetzt werden. Alternativ kann vorgesehen sein, einfach nur Sensormaterial nachzufüllen. Selbstverständlich kann das Sensormaterial aber auch in anderer Weise dem Elektrodenschaft zugeordnet sein, zum Beispiel auf einem abschraubbaren Elektrodenschaftkopf und in Längsrinnen des Elektrodenschaftes oder auch steckbar als "disposable tip".

Die Erfindung betrifft auch das im Zusammenhang mit der erfindungsgemäßen Tensidelektrode verwendete Sensormaterial selbst. Die Erfindung betrifft demgemäß ein Sensormaterial gemäß Anspruch 1, insbesondere für eine erfindungsgemäße Tensidelektrode, aus einem nicht-einpolymerisierten leitfähigen Material, insbesondere Kohle, Kunststoff- oder Keramikpulver, Metall oder Graphit. Zusätzlich zu dem leitfähigen Material ist ein nicht-einpolymerisierter Ionophor, insbesondere ein äquimolares Tensidgemisch, sowie gegebenenfalls ein nicht-einpolymerisiertes Bindemittel und/oder Additive vorgesehen. Selbstverständlich können weitere leitfähige oder nichtleitfähige Bestandteile vorgesehen sein.

Das Sensormaterial liegt in Form einer plastisch verformbaren oder preßbaren Masse, insbesondere als Komprimat, zum Beispiel als Tablette oder "disposable tip", vor. Das erfindungsgemäße Sensormaterial weist in bevorzugter Ausführungsform einen im Vergleich zum Stand der Technik erhöhten Anteil an Ionophor auf. In besonders bevorzugter Ausführungsform der Erfindung liegt der Gehalt an Kohle, Metall, insbesondere Metallstaub, und/oder Graphit bei 10-70 Gew.-%, vorzugsweise bei 70 Gew.-%, an Bindemittel, zum Beispiel Paraffin, bei 20-80 Gew.-%, vorzugsweise bei 20 Gew.-% und an Ionophor bei 0,5-80 Gew.-%, insbesondere bei 15-50 Gew.-%.

Das erfindungsgemäße Sensormaterial weist auch den Vorteil hoher Lagerstabilität auf, so daß das zum Austausch einzusetzende erfindungsgemäße Sensormaterial problemlos ohne Beachtung besonderer Lagerbedingungen ständig bereitgehalten werden kann.

Die Erfindung betrifft auch ein Titrationssystem gemäß Anspruch 14, umfassend die erfindungsgemäße Titriervorrichtung sowie eine beliebige Menge an erneuerbarem Sensormaterial. Das erfindungsgemäße Titrationssystem umfaßt optional weiterhin ein Preßwerkzug zum Einpressen des erfindungsgemäßen Sensormaterials in die in bevorzugter Ausführungsform vorgesehene Vertiefung der erfindungsgemäßen Tensidelektrode. Das Preßwerkzeug kann in bevorzugter Ausführungsform der Erfindung als Rohr ausgeführt sein, in dem zentral und axial ein federgelagerter Dorn zum Anpressen des Sensormaterials in die Vertiefung des Elektrodenschafts angeordnet ist. Ein derartiges Preßwerkzeug kann über das meßseitige, die Vertiefung enthaltende Ende der Tensidelektrode geschoben werden, wobei der Dorn das auf die Vertiefung aufgebrachte Sensormaterial in diese drückt.

Die Erfindung betrifft auch ein Titrationssystem umfassend das erneuerbare Sensormaterial der Erfindung und die erfindungsgemäße Tensidelektrode.

Die Erfindung betrifft auch ein Verfahren zur Herstellung des erfindungsgemäßen Sensormaterials gemäß Anspruch 16 aus einem mindestens zwei Tenside enthaltenden Tensidgemisch und einem leitfähigen Material, wobei jeweils äquimolare Mengen der Tenside, vorzugsweise einzeln, in Wasser gelöst, anschließend die Lösungen miteinander gemischt, die Tenside ausgefällt, filtriert, gewaschen und getrocknet sowie anschließend in trockener Form mit dem leitfähigen Material, insbesondere Kohle, Kunststoff- oder Keramikpulver, Metall oder Graphit, vermischt und in Form eines Pulvers erhalten werden. Insbesondere die Verfahrensschritte des Filtrierens und Waschens können gegebenenfalls unterbleiben. Erfindungsgemäß kann vorgesehen sein, das leitfähige Material, den mindestens einen Ionophor und das gegebenenfalls vorhandene Bindemittel, wie Paraffin, während oder nach dem Vermischen zu erhitzen, um so eine homogenere Verteilung der Einzelbestandteile zu erreichen. Ebenfalls optional kann ein Granulieren der erhaltenen Masse durchgeführt werden. Selbstverständlich kann auch vorgesehen sein, das Sensormaterial in beliebiger anderer Weise herzustellen.

Die Erfindung betrifft in einer weiteren Ausführungsform die Verwendung eines plastisch verformbaren oder preßbaren Gemisches gemäß Anspruch 19, aus mindestens einem Ionophor und einem leitfähigen Material wie Kohle, Kunststoff- oder Keramikpulver, Metall, insbesondere Metallstaub, und/oder Graphit als einzige Bestandteile eines plastisch verformbaren oder preßbaren Sensormaterials für eine Tensidelektrode zur Titration in organischen oder wäßrigen Medien.

Die Erfindung betrifft auch ein Verfahren zur titrimetrischen Bestimmung von Tensiden in organischen und wäßrigen Medien, vorzugsweise mittels einer Zweiphasentitration, wobei zur Bestimmung des Tensids eine Tensidelektrode einer erfindungsgemäßen Titriervorrichtung in die Meßlösung beziehungsweise Meßemulsion eingetaucht, der Titrationszustand von der Tensidelektrode ermittelt und einer Auswerteeinrichtung der Titriervorrichtung übermittelt und der Endpunkt der Titration bestimmt wird.

Mittels der erfindungsgemäßen Vorgehensweise können beliebige Tenside sowohl anionischer, kationischer, nicht-ionischer oder zwitterionischer Art bestimmt werden. Dies kann sowohl die Analyse von Tensiden in Rohstoffen als auch in halbfertigen oder fertigen Formulierungen betreffen. So können beispielsweise Fettalkoholethersulfate, Fettalkoholsulfate, Alkylsulfate, Alkylethersulfate, Alkylphenolpolyglycolethersulfate, Sulfosuccinat-Monoester, Sulfosuccinat-Diester, α-Olefinsulfonate, sekundäre Alkansulfonate, lineare Alkylbenzolsulfonate, Isethionate, Benzalkoniumhalogenide, quarternäre Ammoniumverbindungen, Fettamine oder Dialkyldimethylammoniumchloride bestimmt werden. Erfindungsgemäß lassen sich selbstverständlich auch, vorzugsweise anionische, Tenside in Geschirrspülmitteln, Waschmitteln, Shampoos, Wollshampoos, kosmetischen Ölbädern oder Ölduschbädern, Kühlschmiermitteln, Bohr- und Schneidölen, Reinigungsbädern, Kühlschmiermitteln, Haushaltsreinigern, Haarconditionern, Scheuermilch oder Waschpulver sowie Gurgellösungen, Mund- und Zahnspüllösungen, Zahncremes oder ähnlichem quantitativ bestimmen.

Als Lösungsmittel für die Zweiphasentitration kommen Methylisobutylketon (MIBK), Cyclohexan, n-Hexan sowie Chloroform oder andere chlorierte Kohlenwasserstoffe in Betracht. Der Wahl des Titriermittels kommt große Bedeutung zu. Je besser sich die gebildeten Verbindungen in der Lösungsmittelphase extrahieren lassen, desto größer und steiler fällt der Potentialsprung der Titrationskurve aus.

Als Titriermittel für anionische Tenside kommen TEGO®trant A100, Hexadecylpyridiniumchlorid (HDPC1) oder Hyamine® in Betracht.

Als Titriermittel für kationische Tenside kommen Natriumdodecylsulfat, Dioctylnatriumsulfosuccinat, Tetradecylhydrogensulfat, Natriumtetraphenylborat oder ähnliches in Betracht.

Nicht-ionische Tenside werden als Pseudo-Kationen mit Natriumtetraphenylborat titriert.

Weitere vorteilhafte Ausgestaltungen der Erfindung ergeben sich aus den Unteransprüchen.

Die Erfindung wird anhand der folgenden Ausführungsbeispiele und der dazugehörigen Figuren näher erläutert.

Die Figuren zeigen
- Figur 1: einen schematischen Längsschnitt durch eine erfindungsgemäße Tensidelektrode;
- Figur 2: einen schematischen Längsschnitt durch das meßseitige Ende der Tensidelektrode nach Figur 1 und einen schematischen Querschnitt durch ein Preßwerkzeug,
- Figur 3: eine schematische Darstellung einer erfindungsgemäßen Titriervorrichtung,
- Figur 4: eine mit einer erfindungsgemäßen Titriervorrichtung erstellte Titrationskurve und
- Figur 5: einen Vergleich des Einstellverhaltens bekannter und erfindungsgemäßer Sensorelektroden.

### Beispiel 1: Aufbau der Titriervorrichtung

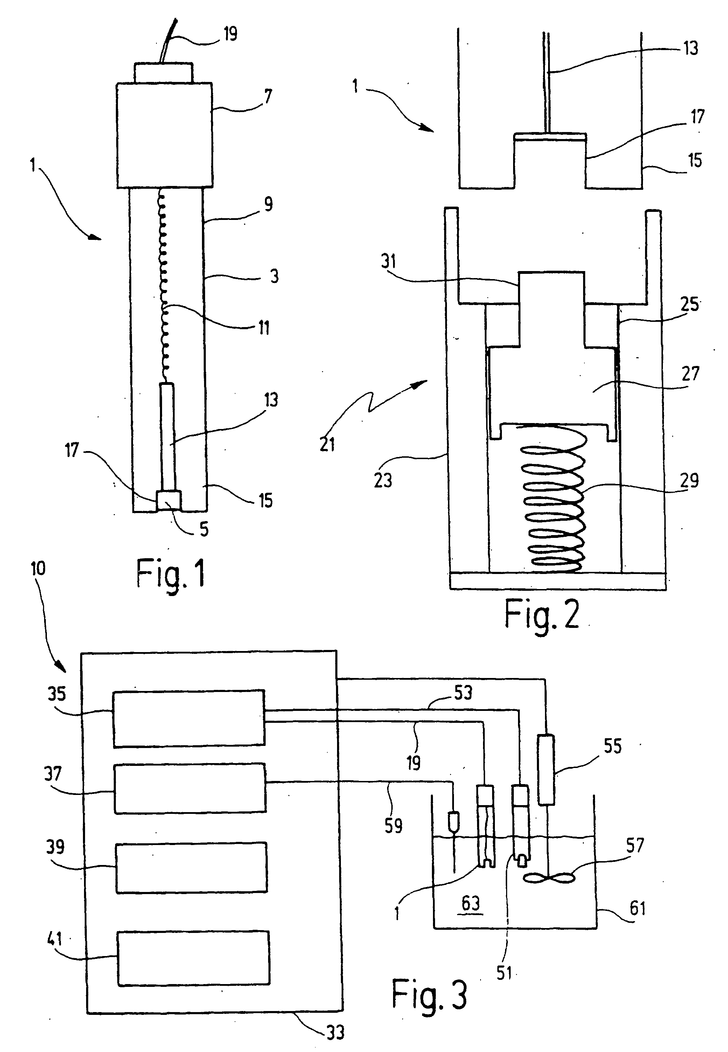

Die Figur 1 zeigt die erfindungsgemäße Tensidelektrode 1, die Teil der in Figur 3 dargestellten erfindungsgemäßen Titriervorrichtung 10 ist. Die erfindungsgemäße Tensidelektrode 1 ist aus einem zylindrischen Elektrodenschaft 3 und einem Sensormaterial 5 aufgebaut. Der Elektrodenschaft 3 weist einen geräteseitigen Anschlußkopf 7 und ein Plastikrohr 9 auf. In dem Plastikrohr 9 sind zentral und entlang seiner Längsachse eine elektrische Leitung 11, beispielsweise ein metallischer Draht, und eine Silberkontaktierung 13 angeordnet. Die Silberkontaktierung 13 stellt die elektrisch leitende Verbindung zwischen der elektrischen Leitung 11 und der am meßseitigen Ende 15 der Elektrode 1 angeordneten, im Querschnitt kreisförmigen Vertiefung 17 her. In der Vertiefung 17 ist plastisch verformbares Sensormaterial 5 eingepreßt. Die Erfindung betrifft selbstverständlich auch eine Tensidelektrode 1 ohne eingepreßtes Sensormaterial.

Das plastisch verformbare Sensormaterial 5 besteht aus 70 Gew.-% Kohlepulver, 20 Gew.-% Paraffin und 10 Gew.-% Ionophor. Der Ionophor stellt ein äquimolares Gemisch aus Natriumdodecylsulfat und Hyamine® dar.

Das Sensormaterial wurde wie folgt hergestellt.

Hyamine® und Natriumdodecylsulfat werden in exakt äquimolekularen Mengen in Wasser miteinander gemischt. Das sich hierbei bildende Ionenpaar, also der Ionophor, wird mit Wasser gewaschen und anschließend getrocknet. Der trockene Ionophor wird mit Kohlepulver und Paraffin zu einem plastisch verformbaren Sensormaterial geschmolzen. Der besseren Handhabung halber wird das Sensormaterial anschließend granuliert.

Das Sensormaterial 5 wird in die Vertiefung 17 der Tensidelektrode 1 eingebracht und anschließend festgepreßt, was beispielsweise mittels des in Figur 2 dargestellten Preßwerkzeuges 21 geschehen kann.

Die Figur 1 zeigt auch die geräteseitig angeordnete elektrische Ableitung 19 der Tensidelektrode 1, die zu der in Figur 3 dargestellten Titriervorrichtung 10 führt.

Die Figur 2 stellt ein zum Einpressen des Sensormaterials 5 in die Vertiefung 17 der Tensidelektrode 1 verwendetes Preßwerkzeug 21 dar. Die Größe beziehungsweise das Volumen der Vertiefung 17 kann beliebig gewählt werden, wobei sichergestellt sein muß, daß genügend Sensormaterial für die zu bewältigende Titrieraufgabe eingepreßt werden kann.

Das Einpressen des Sensormaterials 5 in die Vertiefung 17 kann mittels des in Figur 2 dargestellten Preßwerkzeuges 21 durchgeführt werden. Das Preßwerkzeug 21 weist ein Gehäuse 23 auf, in dem in einer Führung 25 ein Dorn 27 gelagert ist. Eine Feder 29 setzt den Dorn 27 unter Federkraft, so daß eine Dosierung des Anpreßdrucks erleichtert wird. Das federabgewandte Ende 31 des Dorns 27 ist in seiner Geometrie so ausgebildet, daß es formschlüssig in die Vertiefung 17 der Tensidelektrode 1 eingeführt werden kann und das dort aufgebrachte Sensormaterial 5 möglichst gleichmäßig in die Vertiefung 17 einpressen kann.

Die Figur 3 stellt die erfindungsgemäße Titriervorrichtung 10 dar. Die Titriervorrichtung 10 umfaßt ein Grundgerät 33, eine Referenzelektrode 51 mit Kabel 53 und eine elektrische Ableitung 19 zu der erfindungsgemäßen Tensidelektrode 1, an derem meßseitigen Ende 15 die mit Sensormaterial 5 gefüllte Vertiefung 17 angeordnet ist. Das Grundgerät 33 der Titriervorrichtung 10 weist ein Meßgerät 35, eine Dosiereinheit 37 mit Bürettenspitze 59, eine Auswerteeinheit 39 und eine Steuereinheit 41 auf. Dargestellt ist ferner ein Rührmotor 55 mit Propellerrührflügel 57, der für einfache Anwendungen durch einen Magnetrührer ersetzt sein kann. Dargestellt ist auch das Titriergefäß 61 mit der Meßlösung 63. Mittels der erfindungsgemäßen Titriervorrichtung 10 läßt sich eine Titration ionischer Tenside wie folgt durchführen:

### Beispiel 2: Tensidtitration mit einer Kohlepasteelektrode

Geräte und Materialien:
GP-Titrino 736
Propeller-Stabrührer
Ag/AgCl Bezugselektrode
Kohlepasteelektrode
Elektrodenkabel
Wechseleinheit 20 ml für das Titriermittel
pH-Elektrode und Kabel
Wechseleinheit

Bei automatischer Zugabe der Hilfslösungen:
2 Hilfsdosimate inkl. Kabel
Wechseleinheit 20 ml für Ethanol/MIBK
Wechseleinheit 5 ml für TEGO® Add

Probe: SDS-Natriumlaurylsulfat
Reagenzien:
Titrierreagenz: Hyamine® c=1622 (Benzethoniumchlorid) 0,004 mol/l
TEGO® Add
Methylisobutylketon MIBK
Ethanol
dest. Wasser
Schwefelsäure 0,5 mol/l

Durchführung:
Die Probe wird in Wasser gelöst und mit destilliertem Wasser auf 100 ml aufgefüllt. Der pH-Wert wird mit Schwefelsäure auf 3 eingestellt. Anschließend werden 20 ml Ethanol, 10 ml MIBK und 0,2 ml TEGO® Add zugeben. Die Titration wird mit Hyamine 1622® durchgeführt.

### Titrationsparameter der dynamischen Titration

| | |
|---|---|
| Meßpunktdichte | 2 |
| Min. Inkrement | 50 µl |
| Titr.Geschwindigkeit | max. |
| Meßwertdrift | off |
| Wartezeit | 15 s |

### Bemerkungen zur Durchführung der Titration:

Wird mit einem Startvolumen gearbeitet, sollte eine genügend lange Wartezeit (Pause) von 60 s zur Einstellung des Indikatorsignals am Beginn der Titration eingehalten werden. Mit dem Propellerrührer sollte auf Stufe 9 gerührt werden, so daß eine homogene Emulsion entsteht. Luftblasen stören dabei nicht, da sie nicht auf der Elektrodenoberfläche anhaften. Die Bildung einer Schaumkrone muß aber vermieden werden. Eine Kraterbildung stört nicht, solange die Elektrodenspitze in das Meßmedium taucht. Die Probenmenge sollte so gewählt werden, daß bei der Titration der Verbrauch zwischen 10 und 15 ml liegt.

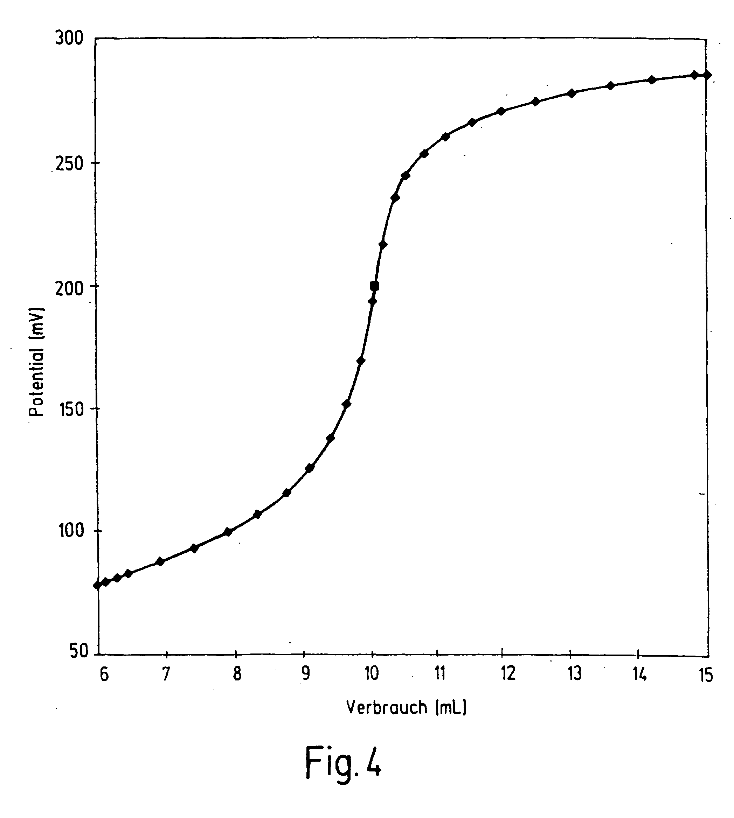

Die Titrierkurve ist aus der Figur 4 entnehmbar. Dargestellt ist das gemessene Potential in Abhängigkeit vom Verbrauch an Titriermittel. Dargestellt sind auch die mit Rauten gekennzeichneten Titrationspunkte sowie der mit einem ausgefüllten Quadrat gekennzeichnete Endpunkt.

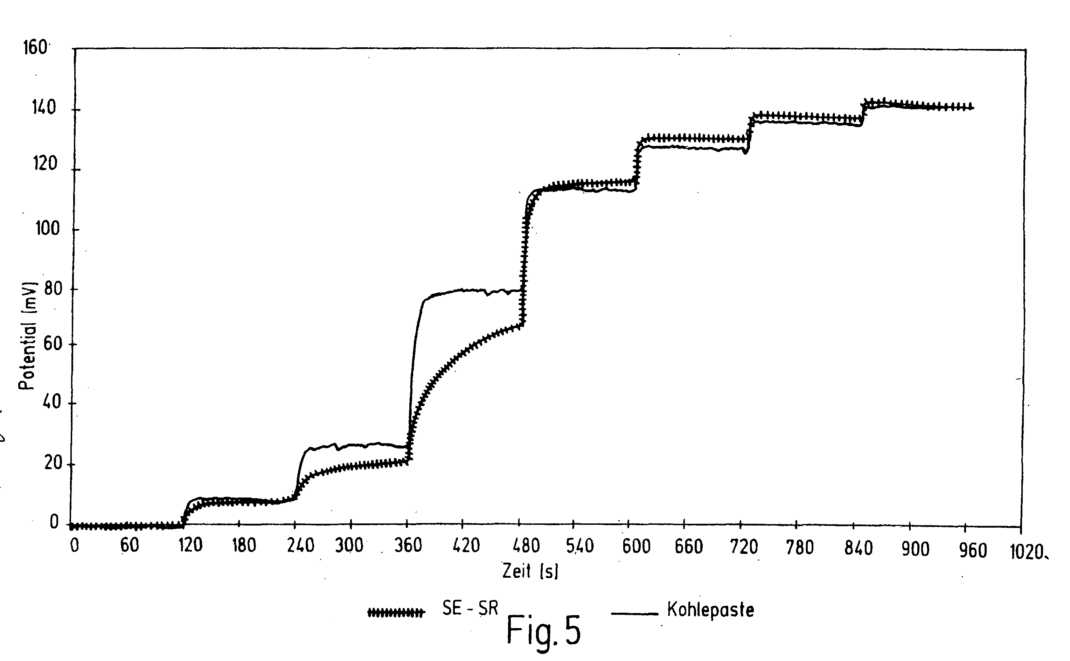

Ein Vergleich des Einstellverhaltens der bekannten Surfractrode Resistant mit einer erfindungsgemäßen Kohlepasteelektrode unter Verwendung einer SDS-Natriumlaurylsulfatprobe ist aus der Figur 5 entnehmbar. Dargestellt ist hier die Einstell-Kinetik des gemessenen Potentials in Abhängigkeit von der Zeit. Der Beginn jeder der dargestellten Stufen gibt den Zeitpunkt der Titriermittelzugabe an. Die Figur 5 zeigt eindeutig, daß sich bei Titration mit der erfindungsgemäßen Kohlepasteelektrode das Potential nach Zugabe des Titriermittels sehr viel schneller einstellt als bei der bekannten Vergleichselektrode. Dies gilt insbesondere in den mittleren Bereichen des Titrationsverlaufes, in dem hohe Potentialsprünge vorliegen und die deswegen interessant sind, weil dort der Titrationsendpunkt liegt.

Sobald das Sensormaterial 5 verbraucht ist, das heißt insbesondere, sobald die Selektivität und Meßgenauigkeit nicht mehr akzeptabel sind, wird das Sensormaterial 5 aus der Vertiefung 17 der Tensidelektrode 1 entfernt, zum Beispiel herausgekratzt und durch neues Sensormaterial 5 ersetzt oder einfach Sensormaterial 5 nachgefüllt.

Das Sensormaterial 5 ist in vorteilhafter Weise besonders lagerstabil und läßt sich demgemäß permanent bereithalten, um ohne Verzug auch umfangreiche Meßreihen durchführen zu können. Die Austauschzyklen für das Sensormaterial 5 betragen je nach durchgeführter Titration und Titrationsdauer 1 bis 7 Tage.

## Patentansprüche

1. Sensormaterial für eine Tensidelektrode, bestehend aus einem nicht-einpolymerisierten leitfähigen Material und mindestens einem nicht-einpolymerisierten Ionophor, wobei das Sensormaterial plastisch verformbar oder preßbar ist.

2. Sensormaterial gemäß Anspruch 1, wobei der mindestens eine nicht-einpolymerisierte Ionophor ein Tensid-Ionenpaar oder ein Tensidgemisch ist.

3. Sensormaterial nach Anspruch 1 oder 2, welches zusätzlich ein Bindemittel und/oder Additive enthält.

4. Tensidelektrode, umfassend einen Elektrodenschaft (3) und ein Sensormaterial (5) gemäß Anspruch 2.

5. Tensidelektrode nach Anspruch 4, wobei zusätzlich ein Bindemittel enthalten ist.

6. Tensidelektrode nach einem der Ansprüche 4 oder 5, wobei das Sensormaterial zusätzlich Additive zur Einstellung der erosiven Eigenschaften und/oder Farbpigmente enthält.

7. Tensidelektrode nach einem der Ansprüche 4 bis 6, wobei das Bindemittel Paraffin ist.

8. Tensidelektrode nach einem der Ansprüche 4 bis 7, wobei das leitfähige Material Kohle, Kunststoff- oder Keramikpulver, Metallstaub oder/und Graphit ist.

9. Tensidelektrode nach einem der Ansprüche 4 bis 8, wobei das Tensidgemisch ein äquimolares Gemisch aus Benzethoniumchlorid und Natriumdodecylsulfat ist.

10. Tensidelektrode nach einem der Ansprüche 4 bis 9, wobei das Sensormaterial aus 10 bis 70 Gew.-%, vorzugsweise 70 Gew.-%, Kohle, 20 bis 80 Gew.-%, vorzugsweise 20 Gew.-%, Paraffin und 0,5 bis 80 Gew.-%, vorzugsweise 10 Gew.-%, Ionophor aufgebaut ist.

11. Tensidelektrode nach einem der Ansprüche 4 bis 10, wobei das Sensormaterial (5) in eine am meßseitigen Ende (15) des Elektrodenschafts (3) angeordnete Vertiefung (17) eingepreßt oder einpreßbar ist.

12. Titriervorrichtung, umfassend ein Grundgerät (10), eine Referenzelektrode (51) und eine Tensidelektrode (1) nach einem der Ansprüche 4 bis 11.

13. Titriervorrichtung nach Anspruch 12, wobei das Grundgerät ein Meßgerät (35), eine Dosiereinheit (37) und gegebenenfalls eine Steuer- und Auswerteeinheit (39;41) umfasst.

14. Titrationssystem, umfassend eine Titriervorrichtung nach einem der Ansprüche 12 oder 13 und ein Preßwerkzeug (21).

15. Titrationssystem, umfassend einen Elektrodenschaft (3), das Sensormaterial (5) nach einem der Ansprüche 1 bis 3 und gegebenenfalls ein Preßwerkzeug (21).

16. Verfahren zur Herstellung des Sensormaterials nach einem der Ansprüche 1 bis 3 aus einem mindestens zwei Tenside enthaltenen Tensidgemisch und einem leitfähigen Material, wobei die Tenside jeweils einzeln in Wasser gelöst, die gelösten Tenside miteinander in einem äquimolaren Verhältnis gemischt, ausgefällt und getrocknet werden und das erhaltene trockene Tensidgemisch anschließend mit dem leitfähigen Material gemischt wird.

17. Verfahren nach Anspruch 16, wobei das Tensidgemisch nach dem Ausfällen filtriert und gewaschen wird.

18. Verfahren zur titrimetrischen Bestimmung eines, insbesondere ionischen oder nichtionischen, Tensides, wobei zur Bestimmung des Tensids eine Tensidelektrode (1) einer Titriervorrichtung (10) nach einem der Ansprüche 12 oder 13, in die zu untersuchende Meßlösung oder Meßemulsion eingetaucht, ein Titriermittel der zu untersuchenden Meßlösung oder Meßemulsion zugegeben, der Titrierzustand von der Tensidelektrode (1) ermittelt und einer Auswerteeinrichtung (41) der Titriervorrichtung (10) gemeldet und anschließend der Endpunkt der Titration bestimmt wird.

19. Verwendung eines plastisch verformbaren oder preßbaren, leitfähigen Materials und mindestens einem Ionophor als einzige Bestandteile eines plastisch verformbaren oder preßbaren Sensormaterials gemäß Anspruch 1 für eine Tensidelektrode zur Bestimmung ionischer oder nicht-ionischer Tenside in wäßrigen oder organischen Medien.

20. Verwendung nach Anspruch 19, wobei das plastisch verformbare oder preßbare, leitfähige Material Kohle, Kunststoff- oder Keramikpulver, Metallstaub und/oder Graphit umfasst.

## Claims

1. Sensor material for a surfactant electrode consisting of a conductive material not incorporated by polymerisation and at least one ionophore not incorporated by polymerisation, wherein the sensor material is formable by plastic deformation or pressable.

2. Sensor material according to claim 1, wherein the at least one ionophore not incorporated by polymerisation is a surfactant ion pair or a surfactant mixture.

3. Sensor material according to claim 1 or 2 which additionally contains a binder and/or an additive.

4. Surfactant electrode comprising an electrode shank (3) and a sensor material (5) according to claim 2.

5. Surfactant electrode according to claim 4, wherein a binder is additionally contained.

6. Surfactant electrode according to one of claims 4 or 5, wherein the sensor material additionally contains additives for adjusting the erosive properties and/or coloured pigments.

7. Surfactant electrode according to one of claims 4 to 6, wherein the binder is paraffin.

8. Surfactant electrode according to one of claims 4 to 7, wherein the conductive material is carbon, powder of plastic material or ceramic powder, metal dust or/and graphite.

9. Surfactant electrode according to one of claims 4 to 8, wherein the surfactant mixture is an equimolar mixture of benzethonium chloride and sodium dodecyl sulphate.

10. Surfactant electrode according to one of claims 4 to 9, wherein the sensor material is made up of 10 to 70 % by wt., preferably 70 % by wt., carbon, 20 to 80 % by wt., preferably 20 % by wt., paraffin and 0,5 to 80 % by wt., preferably 10 % by wt., ionophore.

11. Surfactant electrode according to one of claims 4 to 10, wherein the sensor material (5) is pressed or pressable into an indentation (17) arranged at the measuring side end (15) of the electrode shank (3).

12. Titrating device comprising a basic device (10), a reference electrode (51) and a surfactant electrode (1) according to one of claims 4 to 11.

13. Titrating device according to claim 12, wherein the basic device comprises a measuring device (35), a metering unit (37) and, if necessary, a control and evaluation unit (39; 41).

14. Titration system comprising a titrating device according to one of claims 12 or 13 and a pressing tool (21).

15. Titration system comprising an electrode shank (3), the sensor material (5) according to one of claims 1 to 3 and, if necessary, a pressing tool (21).

16. Process for the production of the sensor material according to one of claims 1 to 3 from a surfactant mixture containing at least two surfactants and a conductive material, wherein the surfactants are dissolved individually in each case in water, the dissolved surfactants are mixed with each other in an equimolar ratio, precipitated and dried and the dry surfactant mixture obtained is subsequently mixed with the conductive material.

17. Process according to claim 16, wherein the surfactant mixture is filtered and washed after precipitation.

18. Process for the titrimetric determination of an - in particular ionic or non-ionic - surfactant, in which, for the determination of the surfactant, a surfactant electrode (1) of a titrating device (10) according to one of claims 12 or 13 is immersed into the measuring solution or the measuring emulsion to be examined, a titrating agent is added to the measuring solution or measuring emulsion, the state of titration of the surfactant electrode (1) is determined and signalled to an evaluation device (41) of the titrating device (10) and the end point of the titration is subsequently determined.

19. Use of a conductive material formable by plastic deformation or pressable and of at least one ionophore as single components of a sensor material formable by plastic deformation of pressable according to claim 1 for a surfactant electrode for the determination of ionic or non-ionic surfactants in aqueous or organic media.

20. Use according to claim 19, wherein the conductive material formable by plastic deformation or pressable comprises carbon, powder of plastic material or ceramic powder, metal dust and/or graphite.

## Revendications

1. Matériel capteur pour une électrode tensioactive, consistant en : un matériel conducteur non incorporé par polymérisation et au moins un ionophore non incorporé par polymérisation, le matériel capteur étant plastiquement déformable ou compressible.

2. Matériel capteur selon la revendication 1, dans lequel l'au moins un ionophore non incorporé par polymérisation est une paire d'ions de tensioactifs ou un mélange de tensioactifs.

3. Matériel capteur selon les revendications 1 ou 2 comprenant en outre un liant et / ou des additifs.

4. Électrode tensioactive comprenant une tige d'électrode (3) et un matériel capteur (5) selon la revendication 2.

5. Électrode tensioactive selon la revendication 4, comprenant en outre un liant.

6. Électrode tensioactive selon l'une quelconque des revendications 4 ou 5, le matériel capteur comprenant en outre des additifs pour le réglage des caractéristiques d'érosion et/ou des colorants.

7. Électrode tensioactive selon l'une quelconque des revendications 4 à 6, le liant étant de la paraffine.

8. Électrode tensioactive selon l'une quelconque des revendications 4 à 7, le matériel conducteur étant du charbon, de la poudre de matière plastique ou de la poudre céramique, de la poudre métallique ou/et du graphite.

9. Électrode tensioactive selon l'une quelconque des revendications 4 à 8, le mélange de tensioactifs étant un mélange équimolaire de chlorure de benzéthonium et de dodécylsulfate de sodium.

10. Électrode tensioactive selon l'une quelconque des revendications 4 à 9, le matériel capteur étant composé de 10 à 70 % en poids, de préférence de 70 % en poids de charbon, de 20 à 80 % en poids, de préférence de 20 % en poids de paraffine et de 0,5 à 80 % en poids, de préférence de 10 % en poids d'ionophore.

11. Électrode tensioactive selon l'une quelconque des revendications 4 à 10, le matériel capteur (5) étant pressé ou compressible dans une cavité (17) disposée dans une extrémité (15) du côté de la prise de mesure sur la tige d'électrode (3).

12. Dispositif de titrage, comprenant un appareil de base (10), une électrode de référence (51) et une électrode tensioactive (1) selon l'une quelconque des revendications 4 à 11.

13. Dispositif de titrage selon la revendication 12, l'appareil de base comprenant un appareil de mesure (35), une unité de dosage (37) et, le cas échéant, une unité de commande et d'analyse (39 ; 41).

14. Système de titrage, comprenant un dispositif de titrage selon l'une quelconque des revendications 12 ou 13 et un outillage de compression (21).

15. Système de titrage, comprenant une tige d'électrode (3), le matériel capteur (5) selon l'une quelconque des revendications 1 à 3 et, le cas échéant, un outillage de compression (21).

16. Procédé de fabrication du matériel capteur selon l'une quelconque des revendications 1 à 3 composé d'un matériel conducteur et d'un mélange de tensioactifs comprenant au moins deux tensioactifs, les tensioactifs étant respectivement dissous dans de l'eau individuellement, les tensioactifs dissous étant mélangés à un rapport équimolaire, précipités et séchés et le mélange de tensioactifs sec obtenu étant par la suite mélangé à un matériel conducteur.

17. Procédé selon la revendication 16, le mélange de tensioactifs étant filtré et lavé après sa précipitation.

18. Procédé pour la détermination titrimétrique d'un tensioactif notamment ionique ou non ionique, selon lequel, en vue de déterminer le tensioactif, une électrode tensioactive (1) d'un dispositif de titrage (10) selon l'une quelconque des revendications 12 ou 13 est immergée dans la solution de mesure ou l'émulsion de mesure, un agent de titrage étant rajouté à la solution de mesure ou à l'émulsion de mesure, l'état de titrage étant déterminé par l'électrode tensioactive (1) et indiqué à un dispositif d'analyse (41) du dispositif de titrage (10) et le point final de la titration étant ensuite déterminé.

19. Emploi d'un matériel conducteur élastiquement déformable ou compressible et d'au moins un ionophore en tant que composants uniques d'un matériel capteur plastiquement déformable ou compressible selon la revendication 1 pour une électrode tensioactive pour la détermination de tensioactifs ioniques ou non ioniques dans des milieux aqueux ou organiques.

20. Emploi selon la revendication 19, le matériel conducteur élastiquement déformable ou compressible comprenant du charbon, de la poudre de matière plastique ou de la poudre céramique, de la poudre métallique et / ou du graphite.
